(19) Europäisches Patentamt
European Patent Office
Office européen des brevets

(11) **EP 2 933 927 B1**

(12) **EUROPEAN PATENT SPECIFICATION**

(45) Date of publication and mention
of the grant of the patent:
**25.10.2017  Bulletin 2017/43**

(51) Int Cl.:
***H04B 1/10*** (2006.01)

(21) Application number: **14735172.0**

(86) International application number:
**PCT/CN2014/070181**

(22) Date of filing: **06.01.2014**

(87) International publication number:
**WO 2014/106488 (10.07.2014 Gazette 2014/28)**

(54) **SELF-ADAPTIVE RADIO-FREQUENCY INTERFERENCE CANCELLING DEVICE AND METHOD, AND RECEIVER**

VORRICHTUNG, VERFAHREN UND EMPFÄNGER ZUR SELBSTADAPTIERENDEN HF-INTERFERENZUNTERDRÜCKUNG

DISPOSITIF ET PROCÉDÉ DE SUPPRESSION AUTO-ADAPTATIVE DU BROUILLAGE RADIOFRÉQUENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.01.2013  CN 201310002205**

(43) Date of publication of application:
**21.10.2015  Bulletin 2015/43**

(73) Proprietor: **Huawei Technologies Co., Ltd.
Longgang District
Shenzhen, Guangdong 518129 (CN)**

(72) Inventors:
• **CHEN, Teyan
Shenzhen
Guangdong 518129 (CN)**
• **DU, Yinggang
Shenzhen
Guangdong 518129 (CN)**
• **LIU, Sheng
Shenzhen
Guangdong 518129 (CN)**

(74) Representative: **Epping - Hermann - Fischer
Patentanwaltsgesellschaft mbH
Schloßschmidstraße 5
80639 München (DE)**

(56) References cited:
EP-A1- 1 724 946          EP-A2- 1 841 084
WO-A1-2006/068635    CN-A- 101 359 956
CN-A- 101 656 562        CN-A- 101 807 959
CN-Y- 201 332 396        US-A1- 2008 089 397
US-A1- 2010 136 925    US-A1- 2011 116 403
US-A1- 2012 201 153

## Description

## TECHNICAL FIELD

The present invention relates to radio full duplex system technologies and, in particular, to an adaptive radio-frequency cancelling device and method, and a receiver.

## BACKGROUND

In a wireless communication system, such as a mobile cellular communication system, a wireless local area network (Wireless Local Area Network, WLAN), and a fixed wireless access (Fixed Wireless Access, FWA) etc., a communication node, such as a base station (Base Station, BS) or an access point (Access Point, AP), a relay station (Relay Station, RS), and a user equipment (User Equipment, UE) etc. usually has capability of transmitting its own signals and receiving signals of other communicating nodes. Since a radio signal is attenuated greatly in a radio communication channel, and compared to the transmitted signals, signals received from a communication peer have become very weak when arriving at a receiving end. For example, power difference between transmitted and received signals of a communication node in the mobile cellular communication system is 80dB-140dB, or even greater. Therefore, in order to avoid interference of the transmitted signals to the received signal of the same transceiver, radio signals are usually transmitted and received on different frequencies or in different time periods. For example, in frequency division duplex (Frequency Division Duplex, FDD), transmission and reception are performed by using different frequency bands separated with a guard band. In time division duplex (Time Division Duplex, TDD), transmission and reception are performed by using different time periods separated with a guard interval. Where the guard band in FDD and the guard interval in TDD are both used for ensuring that the receiving and transmitting are fully isolated, to prevent the transmitting from interfering the receiving.

Different from the existing FDD or TDD technology, wireless full duplex technology can simultaneously perform receiving and transmitting on a same radio channel. Thus, in theory, frequency spectrum efficiency of wireless full duplex is double of FDD or TDD technology. Obviously, it is a precondition for realizing the wireless full duplex technology that strong interference (called self-interference, Self-interface) from a transmitted signal to a received signal of a same transceiver is avoided, decreased, or eliminated as much as possible, so that the self-interference doesn't affect correct reception of useful signals.

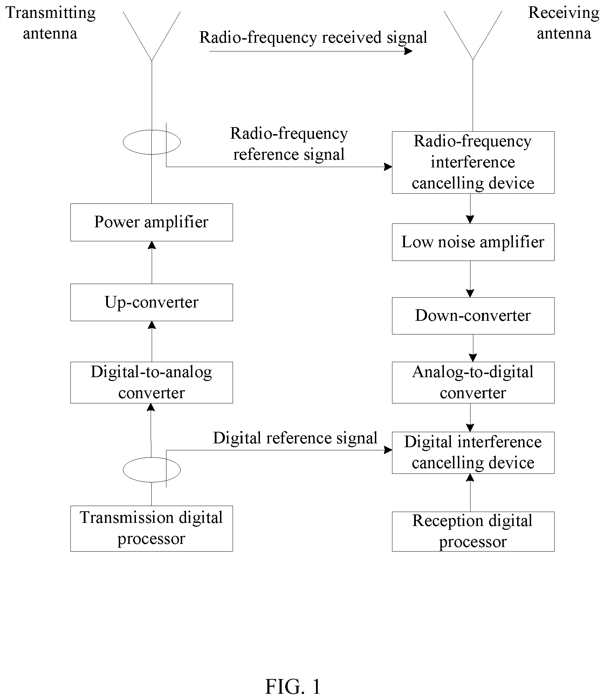

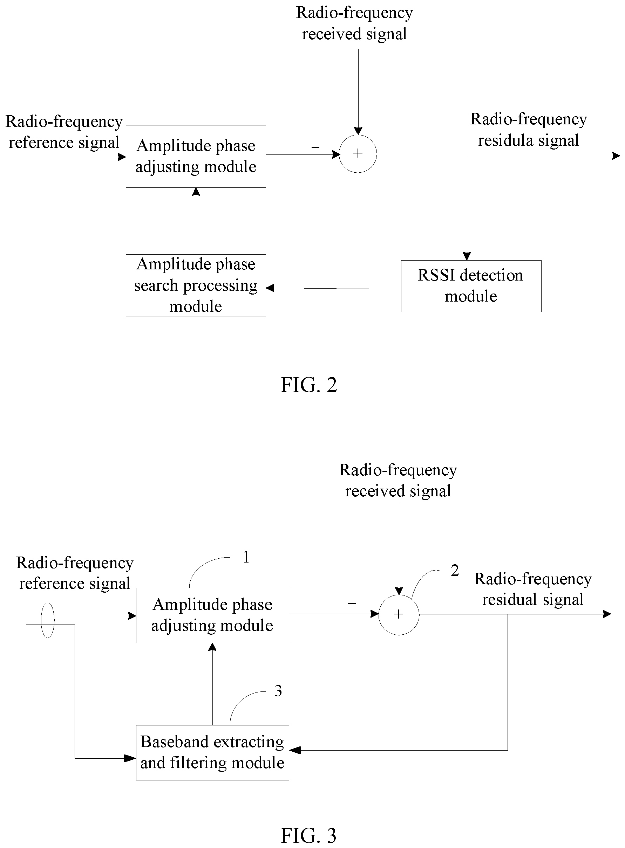

FIG. 1 shows a structure of an existing wireless full duplex communication system, including a transmitter and a receiver. The transmitter includes a transmission digital processor, a digital-to-analog converter, an up-converter, a power amplifier, and a transmitting antenna. The receiver includes a receiving antenna, a radio-frequency interference cancelling device, a low noise amplifier (Low Noise Amplifier, LNA), a down-converter, an analog-to-digital converter, a digital interference cancelling device, and a reception digital processor. Radio-frequency received signals received by the receiver includes self-interference signals and useful signals, and the power of the self-interference signals is much higher than that of the useful signals. Therefore, the self-interference signals need to be cancelled from the radio-frequency received signals, otherwise modules of the receiver front end, such as LNA etc, will be blocked. Hence, in the prior art, before the LNA, the radio-frequency interference cancelling device takes a radio-frequency signal, which is input after being amplified by the power amplifier of the transmitter, as a reference signal, estimates a channel parameter from a local transmitting antenna to a receiving antenna, such as amplitude and phase etc, and adjusts the reference signal to make it as close as possible to the self-interference signal consisted in the received signal, so as to cancel the local self-interference signal received by the receiving antenna in analog domain. Specifically, the radio-frequency interference cancelling device in the existing receiver performs corresponding adjustment of the radio-frequency reference signal, including amplitude and phase etc, mainly based on a received signal strength indicator (Received Signal Strength Indicator, RSSI) method, and then performs cancellation operation on the radio-frequency received signal. As shown in FIG. 2, it shows a structure of an existing radio-frequency interference cancelling device based on RSSI detection, including an amplitude phase adjusting module, a subtractor, an RSSI detecting module, and an amplitude phase search processing module. The radio-frequency reference signal is adjusted by the amplitude phase adjusting module and then is cancelled from the radio-frequency received signal. After the cancellation, the radio-frequency residual signal is detected by the RSSI detection module. The amplitude phased search processing module processes a feedback RSSI detection result using an amplitude and phase search algorithm, generates an amplitude phase control signal, adjusts a search step size, and updates the amplitude and the phase for the next adjustment. In this connection document US2012201153 discloses an analog RF-based canceller wherein the adjustment of the amplitude and phase of the cancellation signal is based on the measured RSSI.

However, in the existing self-interference cancelling method based on RSSI detection, the RSSI detection module can only obtain an absolute value of the adjusted search step size, the amplitude phase search processing module further needs to search for an orientation for adjustment, to determine whether to increase or decrease the current amplitude and phase by the corresponding step size. Here, the orientations of the amplitude and the phase need to be simultaneously searched and determined. Therefore, this amplitude phase search algorithm converges slowly and is only applicable to a situation with few parameters to be adjusted, thus it cannot follow parameters variation in time due to low convergence speed, and estimation accuracy thereof is affected.

Document "TUNING AMPLITUDE SLOPE MATCHED FILTER ARCHITECTURE" (US 2010/01366925 A1, Raymond J. Lackey) discloses a tuning control system and associated method, for continuously and automatically tuning a lobed amplitude slope matching filter (ASMF) to a band center of an interfering signal to provide improved rejection of all interfering signal coupled from a transmission antenna into a local receive antenna in the presence of local multi-path, thereby providing improved adaptive control loop performance.

## SUMMARY

In view of the above problems, an objective of the present invention is to provide an adaptive radio-interference cancelling device and method, a receiver and a wireless full duplex communication system, to solve the technology problems of slow convergence speed and inaccurate estimation on the amplitude and the phase of the self-interference signal relative to the radio-frequency reference signal, which exist in the existing self-interference cancellation search method based on RSSI detection.

In a first aspect, an adaptive radio-frequency interference cancelling device is provided, where the adaptive radio-frequency interference cancelling device applies to a full duplex communication system and includes:

an amplitude phase adjusting module, configured to adjust an amplitude and a phase of a radio-frequency reference signal, output a radio-frequency adjustment signal to a subtractor, to enable the radio-frequency adjustment signal to converge to a self-interference signal in a radio-frequency received signal, where the radio-frequency reference signal is output by a power amplifier;

the subtractor, configured to receive the radio-frequency received signal and the radio-frequency adjustment signal output by the amplitude phase adjusting module, and output a radio-frequency residual signal, where the radio-frequency residual signal is a difference signal between the radio-frequency received signal and the radio-frequency adjustment signal; and

a baseband extracting and filtering module, configured to receive the radio-frequency reference signal and the radio-frequency residual signal output by the subtractor, and extract a baseband signal, perform least mean squares adaptive filtering processing on the baseband signal to obtain an amplitude phase control, and output to the amplitude phase adjusting module, where the amplitude phase control signal is used to control the amplitude phase adjusting module to adjust the amplitude and the phase of the radio-frequency reference signal;

where the baseband extracting and filtering module includes a first multiplier, a first low-pass filter, a phase shifter, a second multiplier, a second low-pass filter, and a least mean squares adaptive filtering processing module, the radio-frequency reference signal is split into two signals, of which one is mixed with the radio-frequency residual signal by the first multiplier and then passes through the first low-pass filter to obtain a first baseband product signal, and the other split radio-frequency reference signal is phase shifted by 90 degrees via the phase shifter, mixed with the radio-frequency residual signal by the second multiplier and filtered by the second low-pass filter to obtain a second baseband product signal, and the first baseband product signal and the second baseband product signal are input to the least mean squares adaptive filtering processing module to be converted into digital signals to generate the amplitude phase control signal used to control the amplitude phase adjusting module.

According to the first aspect, in a first possible implementation manner, the amplitude phase control signal is an adjustment coefficient signal, and the amplitude phase adjusting module adjusts the amplitude and the phase of the radio-frequency reference signal according to the received adjustment coefficient signal.

In a second aspect, the adaptive radio-frequency interference cancelling method includes:

adjusting an amplitude and a phase of a radio-frequency reference signal and outputting a radio-frequency adjustment signal, to enable the radio-frequency adjustment signal to converge to a self-interference signal in a radio-frequency received signal;

obtaining a radio-frequency residual signal, where the radio-frequency residual signal is a difference signal between the radio-frequency received signal and the radio-frequency adjustment signal;

receiving the radio-frequency residual signal and the radio-frequency reference signal, extracting a baseband signal, and performing least mean squares adaptive filtering processing on the baseband signal to obtain an amplitude phase control signal, where the amplitude phase control signal is used to control adjustment of the amplitude and the phase of the radio-frequency reference signal;

where the receiving the radio-frequency residual signal and the radio-frequency reference signal, extracting a baseband signal, and performing least mean squares adaptive filtering processing on the baseband signal to obtain an amplitude phase control signal, includes:

splitting the radio-frequency reference signal into two signals, mixing one of the two split signals with the radio-frequency residual signal and then performing low-pass filtering, to obtain a first baseband product signal; phase-shifting the other split radio-frequency reference signal by 90 degrees, mixing with the radio-frequency residual signal and performing low-pass filtering to obtain a second baseband product signal; and performing analog-to-digital processing and least mean squares adaptive filtering processing on the first baseband product signal and the second baseband product signal to generate the amplitude phase control signal, where the amplitude phase control signal is used to control the adjustment of the amplitude and the phase of the radio-frequency reference signal.

In a third aspect, the receiver includes a receiving antenna, a low noise amplifier, a down-converter, an analog-to-digital converter, a digital interference cancelling device and a reception digital signal processor, the receiver further includes an adaptive radio-frequency interference cancelling device, the receiving antenna, the adaptive radio-frequency interference cancelling device, the low noise amplifier, the down-converter, the analog-to-digital converter, the digital interference cancelling device and the reception digital signal processor are connected sequentially, the adaptive radio-frequency interference cancelling device is configured to receive as input signal a radio-frequency reference signal from a transmitter and the digital interference cancelling device is configured to receive as input signal a digital reference signal from the transmitter.

In a fourth aspect, the wireless full duplex communication system includes a transmitter and the aforesaid receiver, the transmitter includes a transmission digital signal processor, a digital-to-analog converter, an up-converter, a power amplifier and a transmitting antenna that are connected sequentially. a radio-frequency reference signal output by the power amplifier is input to the adaptive radio-frequency interference cancelling device of the receiver, and a digital reference signal output by the transmission digital signal processor is input to the digital interference cancelling device of the receiver.

The present invention adopts a radio-frequency interference cancellation solution based on least mean squares (Least mean squares, LMS) adaptive filtering algorithm. Since the LMS adaptive filtering algorithm is executed in radio-frequency analog domain, it cannot directly sample a high-frequency radio-frequency signal, so the algorithm can only be implemented in digital baseband generally. Therefore in the present invention, the baseband extracting and filtering module directly extracts baseband signals from the radio-frequency reference signal and the radio-frequency residual signal, estimates the amplitude and the phase of the self-interference signal relative to the reference signal using the LMS adaptive filtering algorithm to generate a amplitude phase control signal, so as to adjust the amplitude and the phase of the radio-frequency reference signal and make it converge to the self-reference signal in the radio-frequency received signal. Compared to the existing algorithm based on RSSI detection, the LMS adaptive filtering algorithm has a faster convergence speed and provides a more accurate estimated result.

## BRIEF DESCRIPTION OF DRAWINGS

FIG. 1 is a structural diagram of an existing wireless full duplex communication system;
FIG. 2 is a structural diagram of an existing radio-frequency interference cancelling device based on RSSI detection;
FIG. 3 is a structural diagram of an adaptive radio-frequency interference cancelling device according to a first embodiment of the present invention;
FIG. 4 is a structural diagram of an adaptive radio-frequency interference cancelling device according to a second embodiment of the present invention;
FIG. 5 is an MSE performance comparing diagram of an LMS adaptive filtering algorithm and an amplitude phase search algorithm based on RSSI detection;
FIG. 6 is a flow diagram of an adaptive radio-frequency interference cancelling method according to a third embodiment of the present invention;
FIG. 7 is a flow diagram of an adaptive radio-frequency interference cancelling method according to a fourth embodiment of the present invention;
FIG. 8 is a structural diagram of a receiver according to a fifth embodiment of the present invention;
FIG. 9 is a structural diagram of a wireless full duplex communication system according to a sixth embodiment of the present invention.

## DESCRIPTION OF EMBODIMENTS

In order to make the purposes, technical solutions, and advantages of the present invention more clearly, the present invention is further described in detail with reference to the accompanying drawings and embodiments. It should be understood that, the embodiments described herein are merely used to explain the invention, but not intended to limit the invention.

The technical solutions of the present invention are described via the following embodiments.

### First Embodiment

FIG. 3 shows a structure of an adaptive radio-frequency interference cancelling device according to a first embodiment of the present invention. Only parts related to the embodiment of the invention are shown for convenience of explanation.

The adaptive radio-frequency interference cancelling device according to this embodiment includes:

an amplitude phase adjusting module 1, configured to adjust an amplitude and a phase of a radio-frequency reference signal, output a radio-frequency adjustment signal to a subtractor 2, to enable the radio-frequency adjustment signal to converge to a self-interference signal in a radio-frequency received signal;

the subtractor 2, configured to receive the radio-frequency received signal and the radio-frequency adjustment signal output by the amplitude phase adjusting module 1, and output a radio-frequency residual signal, where the radio-frequency residual signal is a difference signal between the radio-frequency received signal and the radio-frequency adjustment signal; and

a baseband extracting and filtering module 3, configured to receive the radio-frequency reference signal and the radio-frequency residual signal output by the subtractor 2, and extract baseband signals, perform least mean squares adaptive filtering processing on the baseband signals to obtain an amplitude phase control signal and output to the amplitude phase adjusting module 1, where the amplitude phase control signal is used to control the amplitude phase adjusting module 1 to adjust the amplitude and the phase of the radio-frequency reference signal.

In order to apply an LMS adaptive filtering algorithm to this embodiment, since the LMS adaptive filtering algorithm cannot directly sample a high frequency radio-frequency signal, in the present embodiment, the baseband extracting and filtering module 3 extracts base signals from the radio-frequency reference signal and radio-frequency residual signal, and processes the baseband signals using the LMS adaptive filtering algorithm to obtain the amplitude phase control signal, and then, controls the amplitude phase control module 1 according to the amplitude phase control signal to complement gradual adjustment of the amplitude and the phase of the radio-frequency reference signal, to enable the radio-frequency reference signal to converge to the self-interference signal in the radio-frequency received signal through continuous iteration control. Compared to the existing algorithm based on RSSI detection, the LMS adaptive filtering algorithm has a faster convergence speed and provides a more accurate estimation result.

### Second Embodiment

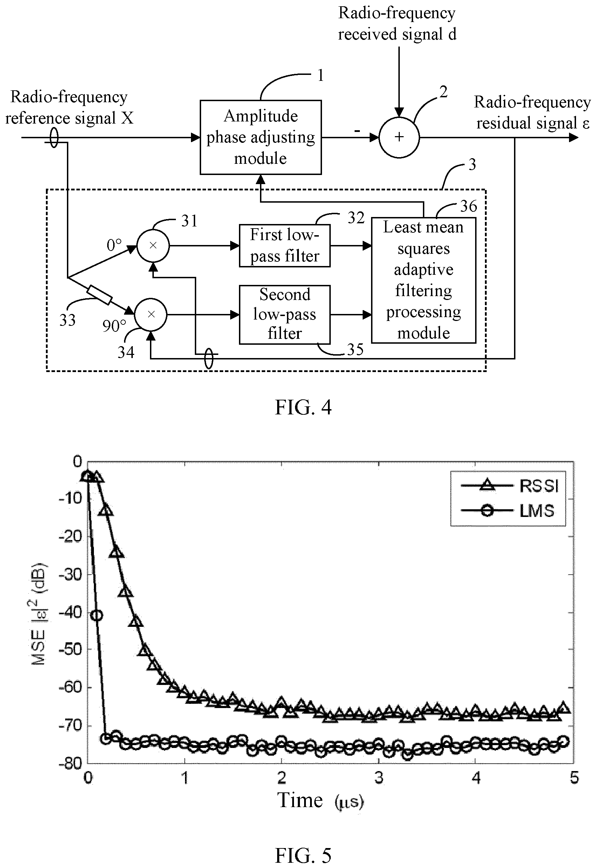

FIG. 4 shows a structure of an adaptive radio-frequency interference cancelling device according to a second embodiment of the present invention. Only parts related to this embodiment of the present invention are shown for convenience of explanation.

The adaptive radio-frequency interference cancelling device provided by this embodiment includes an amplitude phase adjusting module 1, a subtractor 2, and a baseband extracting and filtering module 3 as described in the first embodiment. As shown in FIG. 4, the baseband extracting and filtering module 3 includes a first multiplier 31, a first low-pass filter 32, a phase shifter 33, a second multiplier 34, a second low-pass filter 35 and a least mean squares adaptive filtering processing module 36. The radio-frequency reference signal is split into two signals, of which one is mixed with the radio-frequency residual signal by the first multiplier 31 and then passes through the first low-pass filter 32 to obtain a first baseband product signal, while the other split radio-frequency reference signal is phase-shifted by 90 degrees via the phase shifter 33, and then is mixed with the radio-frequency residual signal by the second multiplier 34 and is filtered by the second low-pass filter 35 to obtain a second baseband product signal. The first baseband product signal and the second baseband product signal are input to the least mean squares adaptive filtering processing module 36 to generate an amplitude phase control signal used to control the amplitude phase adjusting module 1.

This embodiment discloses a preferred structure of the baseband extracting and filtering module 3 based on the first embodiment. In this embodiment, adjustment of the amplitude and the phase is based on the products of the radio-frequency reference signal X and the radio-frequency residual signal ε. Specifically, the radio-frequency reference signal X is split into two signals, one of which is phase-shifted by 90 degrees. The two split signals of the radio-frequency reference signal are mixed with the radio-frequency residual signal ε and pass through the low-pass filters to obtain the baseband products of the two signals. And then, the amplitude and the phase of the self-interference signal relative to the reference signal, i.e. adjustment coefficient W of the amplitude and the phase, are estimated using the LMS adaptive filtering algorithm, to complete corresponding adjustment of the amplitude and the phase of the radio-frequency reference signal X. The adjusted radio-frequency signal is cancelled from the radio-frequency received signal d again to obtain a new radio-frequency residual signal ε.

In the aforementioned technical solution, assuming that the K-th iteration is prepared to be performed, that is, being at the K-th sampling moment, here a radio-frequency reference signal vector is represented by $X^k$, namely

$$X^k = [I_{ref}\cos(\omega t) + Q_{ref}\sin(\omega t), \quad -I_{ref}\sin(\omega t) + Q_{ref}\cos(\omega t)]^T, \quad (1)$$

where $I_{ref}$ and $Q_{ref}$ represent baseband in-phase/quadrature signal (i.e. I/Q signal) respectively, $\omega$ is carrier frequency, T represents matrix transposition, $I_{ref}\cos(\omega t) + Q_{ref}\sin(\omega t)$ is an original signal of the radio-frequency reference signal, $- I_{ref}\sin(\omega t) + Q_{ref}\cos(\omega t)$ is the radio-frequency reference signal phase-shifted by 90 degrees.

The radio-frequency received signal $d^k$ can be expressed as

$$d^k = aI_{ref}\cos(\omega t + \varphi) + aQ_{ref}\sin(\omega t + \varphi) + n(t)$$
$$= a\cos(\varphi)[I_{ref}\cos(\omega t) + Q_{ref}\sin(\omega t)] + a\sin(\varphi)[-I_{ref}\sin(\omega t) + Q_{ref}\cos(\omega t)] + n(t),$$

$$(2)$$

where $a$ and $\varphi$ respectively represent amplitude and phase variations of the radio-frequency received signal, and $n(t)$ is white noise.

In this embodiment, it is assumed that a filter coefficient of the least mean squares adaptive filtering processing module 36 is

$$W^k = [\hat{a}^k\cos(\hat{\varphi}^k), \quad \hat{a}^k\sin(\hat{\varphi}^k)]^T \qquad (3)$$

where, $\hat{a}^k$ and $\hat{\varphi}^k$ represent estimation values of the amplitude $a$ and the phase $\varphi$ at the K-th sampling moment respectively. According to the formulas (1), (2) and (3), it can be known that the radio-frequency residual signal

$$\varepsilon^k = d^k - (W^k)^T X^k$$
$$= [a\cos(\varphi) - \hat{a}^k\cos(\hat{\varphi}^k)][I_{ref}\cos(\omega t) + Q_{ref}\sin(\omega t)] +$$
$$[a\sin(\varphi) - \hat{a}^k\sin(\hat{\varphi}^k)][-I_{ref}\sin(\omega t) + Q_{ref}\cos(\omega t)] + n(t)$$
$$= e_1[I_{ref}\cos(\omega t) + Q_{ref}\sin(\omega t)] + e_2[-I_{ref}\sin(\omega t) + Q_{ref}\cos(\omega t)] + n(t),$$

where $e_1 = a\cos(\varphi) - \hat{a}^k\cos(\hat{\varphi}^k)$, $e_2 = a\sin(\varphi) - \hat{a}^k\sin(\hat{\varphi}^k)$.

The radio-frequency residual signal $\varepsilon^k$ and the radio-frequency reference signal $X^k$ are mixed, it can be noticed that, besides the baseband signal, the product does not contain any terms at fundamental frequency $\omega$, but only contains second harmonic terms at frequency $2\omega$. Therefore a signal corresponding to the product item is low-pass filtered to obtain the baseband signal.

$$\{\varepsilon^k X^k\}_{LPF} = [P_{ref}e_1 / 2, \quad P_{ref}e_2 / 2]^T \qquad (4)$$

where $P_{ref} = I_{ref}^2 + Q_{ref}^2$. Based on the LMS adaptive filtering algorithm,

the coefficient of the (k+1)-th iteration, can be obtained via the coefficient of the k-th iteration and the baseband signal $\{\varepsilon^k X^k\}_{LPF}: W^{k+1} = W^k + \mu \{\varepsilon^k X^k\}_{LPF}$, where $\mu$ is a step size parameter of the LMS adaptive filtering algorithm. Substituting into formula (4), it is finally obtained that

$$W^{k+1} = W^k + \mu P_{ref} [e_1, \quad e_2]^T / 2.$$

It can be seen that, $W^{k+1}$ is linear iteration of $W^k$. With $\hat{a}^k$ and $\hat{\varphi}^k$ of $W^k$ approaching $a$ and $\varphi$, the vector $[e_1, e_2]^T$ in the iteration expression of $W^{k+1}$ will decreases gradually, and $W^{k+1}$ will converge to $W^k$. So, through selecting a proper $\mu$, the amplitude adjustment $a$ and the phase adjustment $\varphi$ of the self-interference signal relative to the reference signal can be estimated, and the filtering coefficient for the least mean squares adaptive filtering processing module can be adjusted accordingly, so as to achieve the objective of adjusting the reference signal to minimize $\varepsilon^k$.

In order to see an advantage of the LMS adaptive filtering algorithm relative to the amplitude phase search algorithm based on RSSI detection, refer to FIG. 5 which shows MSE (Mean Squared Error) performance comparison of the two algorithms. In this figure, a noise-to-signal ratio SNR=85db, $\mu$ is selected as 0.6, and 12-bit quantization is performed to the filtering coefficient of the least mean squares adaptive filtering processing module. It can be seen from FIG. 5 that, relative to the amplitude phase search algorithm based on RSSI detection, the LMS adaptive filtering algorithm adopted by the least mean squares adaptive filtering processing module of this embodiment has a faster convergence speed and provides a more accurate estimation result.

Compared with the first embodiment, this embodiment provides a specific baseband extracting manner. Although the baseband signal is known at the transmitter side, considering that a non-linear factor of a power amplifier of the transmitter will influence an effect of self-interference elimination, therefore in simulating interference elimination, an amplified radio-frequency signal is usually used as a reference signal, i.e. the radio-frequency reference signal in this embodiment. Usually, in order to obtain a baseband signal, down conversion needs to be performed to the radio-frequency residual signal and the radio-frequency reference signal respectively, but in such method a local oscillator signal needs to be generated, which is complicated to implement, and moreover, may introduce non-linear factors, such as I/Q imbalance, and affect the converge speed of the algorithm and the accuracy of estimation. However, in this embodiment, down conversion needs not to be performed, the radio-frequency reference signal is directly split into two signals, one of which is phase-shifted by 90 degrees, and then the two split radio-frequency reference signals are mixed with the radio-frequency residual signal and then low-pass filtered to filter out all harmonic components, so as to obtain the baseband signals. Therefore, during iteration, the least mean squares adaptive filtering processing module can operate in the baseband, which facilitates digital computation and control and realizes a purpose of controlling convergence of the radio-frequency reference signal. Since down conversion needs not to be performed in this embodiment, implementation complexity is reduced, and an influence of the non-linear factors, such as I/Q imbalance, to the algorithm is avoided.

### Third embodiment

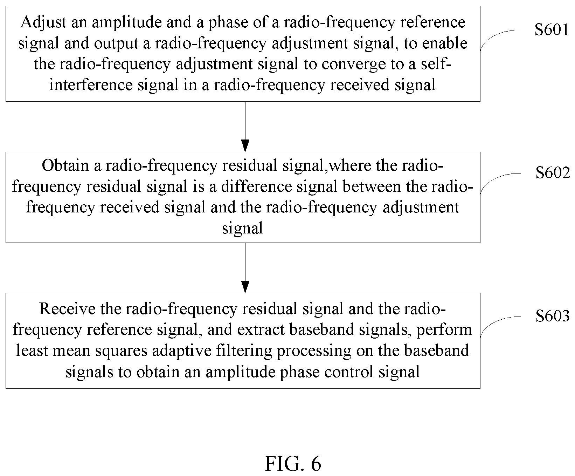

FIG. 6 shows a flow of an adaptive radio-frequency interference cancelling method according to a third embodiment of the present invention. Only parts related to the embodiment of the present invention are shown for convenience of explanation.

The adaptive radio-frequency interference cancelling method provided by the present embodiment includes:

Step S601: Adjust an amplitude and a phase of a radio-frequency reference signal and output a radio-frequency adjustment signal, to enable the radio-frequency adjustment signal to converge to a self-interference signal in a radio-frequency received signal.

Step S602: Obtain a radio-frequency residual signal, where the radio-frequency residual signal is a difference signal between the radio-frequency received signal and the radio-frequency adjustment signal.

Step S603: Receive the radio-frequency residual signal and the radio-frequency reference signal, and extract baseband signals, perform least mean squares adaptive filtering processing on the baseband signals to obtain an amplitude phase control signal, where the amplitude phase control signal is used to control adjustment of the amplitude and the phase of the radio-frequency reference signal.

Steps S601-S603 of this embodiment are correspondingly implemented by the amplitude phase adjusting module 1, the subtractor 2, and the baseband extracting and filtering module 3. In the method of this embodiment, a feedback loop is formed; in step S603, the baseband signals are extracted from the radio-frequency residual signal and the radio-frequency reference signal, and the amplitude phase control signal is obtained according to the LMS adaptive filtering algorithm to control and adjust the amplitude and the phase of the radio-frequency reference signal described in step S601, and then the next iteration is performed until the radio-frequency reference signal converges to the self-interference signal of the radio-frequency received signal. Compared to the existing algorithm based on RSSI detection, the LMS adaptive filtering algorithm of this embodiment has a faster convergence speed and provides a more accurate estimation result.

**Fourth embodiment**

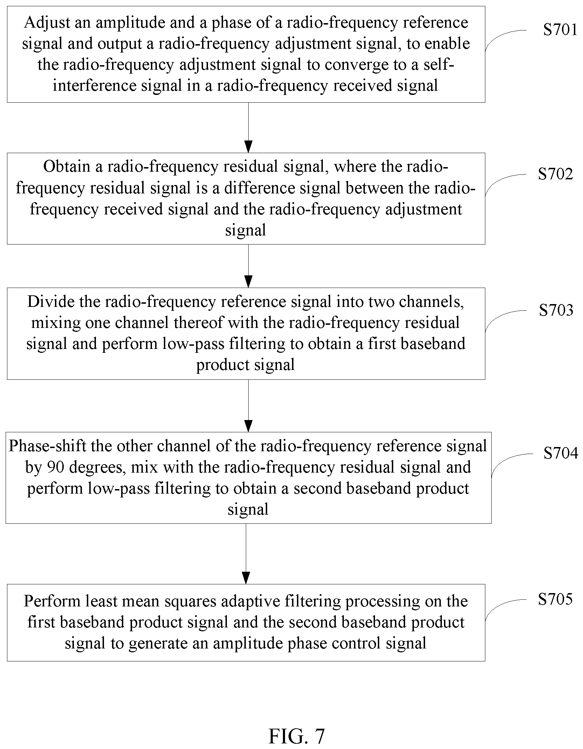

FIG. 7 shows a flow of an adaptive radio-frequency interference cancelling method according to a fourth embodiment of the present invention. Only parts related to the embodiment of the invention are shown for convenience of explanation.

The adaptive radio-frequency interference cancelling method provided by this embodiment includes:

Step S701: Adjust an amplitude and a phase of a radio-frequency reference signal and output a radio-frequency adjustment signal, to enable the radio-frequency adjustment signal to converge to a self-interference signal in a radio-frequency received signal.

Step S702: Obtain a radio-frequency residual signal, where the radio-frequency residual signal is a difference signal between the radio-frequency received signal and the radio-frequency adjustment signal.

Step S703: Split the radio-frequency reference signal into two signals, mix one of the two split signals with the radio-frequency residual signal and perform low-pass filtering to obtain a first baseband product signal.

Step S704: Phase-shift the other split radio-frequency reference signal by 90 degrees, mix with the radio-frequency residual signal and perform low-pass filtering to obtain a second baseband product signal.

Step S705: Perform least mean squares adaptive filtering processing on the first baseband product signal and the second baseband product signal to generate an amplitude phase control signal, where the amplitude phase control signal is used to control adjustment of the amplitude and the phase of the radio-frequency reference signal.

The steps S703-S705 above are detailed and preferred steps of step S603 in the third embodiment. In this embodiment, adjustment of the amplitude and the phase is based on the products of the radio-frequency reference signal X and the radio-frequency residual signal $\varepsilon$. In detail, the radio-frequency reference signal is split into two signals, one of which is phase-shifted by 90 degrees, the two split radio-frequency reference signals are then mixed with the radio-frequency residual signal and pass through low-pass filters to obtain the baseband products of the two signals. Then, the amplitude and the phase of the self-interference signal relative to the reference signal, i.e. adjustment coefficient of the amplitude and the phase, are estimated using the LMS adaptive filtering algorithm to complete corresponding adjustment of the amplitude and the phase of the radio-frequency reference signal X. The adjusted radio-frequency signal is cancelled from the radio-frequency received signal again and a new radio-frequency residual signal is obtained to perform the next iteration.

Usually, in order to obtain a baseband signal, down conversion needs to be performed on the radio-frequency residual signal and the radio-frequency reference signal respectively, but in such method a local oscillator signal needs to be generated, which is complicated to implement and moreover, may introduce non-linear factors, such as I/Q imbalance, and affect the convergence speed of the algorithm and accuracy of estimation. However, in this embodiment, down conversion needs not to be performed, the radio-frequency reference signal is directly split into two signals, one of which is phase-shifted by 90 degrees, and then the two split radio-frequency reference signals are mixed with the radio-frequency residual signal and then low-pass filtered to filter out all harmonic components, to obtain the baseband signals. Therefore, during iteration, the least mean squares adaptive filtering processing module can operate in the baseband, which facilitates digital computation and control and realizes a purpose of controlling convergence of the radio-frequency reference signal. Since down conversion needs not to be performed in this embodiment, implementation complexity is reduced, and an influence of the non-linear factors, such as I/Q imbalance, to the algorithm is avoided.

**Fifth embodiment**

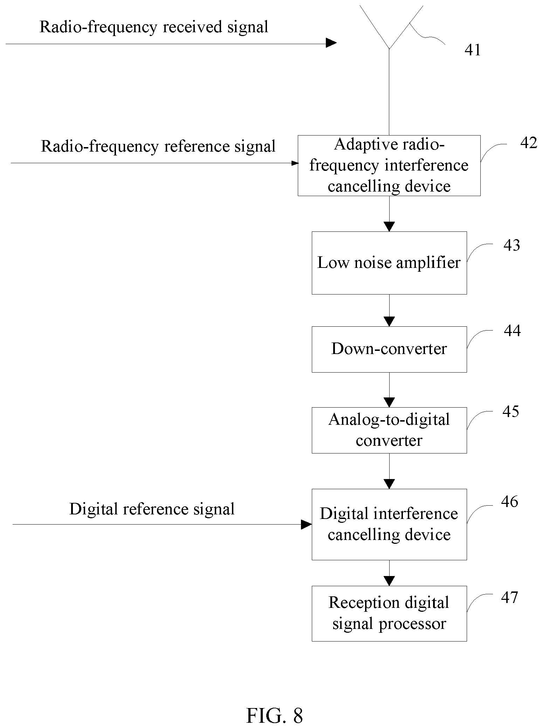

FIG. 8 shows a structure of a receiver according to a fifth embodiment of the invention. Only parts related to the embodiment of the present invention are shown for convenience of explanation.

The receiver according to this embodiment includes a receiving antenna 41, a low noise amplifier 43, a down-converter 44, an analog-to-digital converter 45, a digital interference cancelling device 46, a reception digital signal processor 47, and an adaptive radio-frequency interference cancelling device 42 according to the first embodiment or the second embodiment. The receiving antenna 41, the adaptive radio-frequency interference cancelling device 42, the low noise amplifier 43, the down-converter 44, the analog-to-digital converter 45, the digital interference cancelling device 46, and the reception digital signal processor 47 are connected sequentially. The adaptive radio-frequency interference cancelling device 42 is further input with a radio-frequency reference signal from a transmitter, and the digital interference cancelling device 46 is further input with a digital reference signal from the transmitter.

The radio-frequency received signal received by the receiver of the embodiment includes a self-interference signal and a useful signal. The adaptive radio-frequency interference cancelling device 42 of the embodiment achieves adjustment of an amplitude and a phase of the radio-frequency reference signal using an LMS adaptive filtering algorithm to enable the radio-frequency reference signal to converge to the self-interference signal in the radio-frequency received signal. Therefore, after converging, the signal output by the adaptive radio-frequency interference cancelling device 42 is the useful signal, thus self-interference elimination is achieved. Compared to an existing receiver, the adaptive radio-frequency interference cancelling device 42 in this embodiment adopts the LMS adaptive filtering algorithm, which has a faster convergence speed and provides a more accurate estimation result compared to the amplitude phase search algorithm based on RSSI detection adopted by an existing radio-frequency interference cancelling device.

**Sixth embodiment**

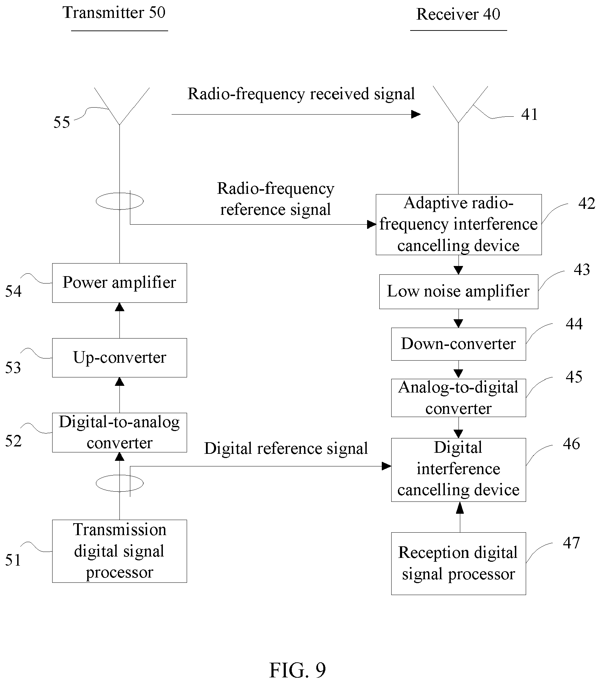

FIG. 9 shows a structure of a wireless full duplex communication system according to a sixth embodiment of the invention. Only parts related to the present embodiment of the present invention are shown for convenience of explanation.

The wireless full duplex communication system according to the present embodiment includes a transmitter 50 and a receiver 40 according to the fifth embodiment. The transmitter includes a transmission digital signal processor 51, a digital-to-analog converter 52, an up-converter 53, a power amplifier 54 and a transmitting antenna 55 which are connected sequentially. A radio-frequency reference signal output by the power amplifier 54 is input to the adaptive radio-frequency interference cancelling device 42 of the receiver, and a digital reference signal output by the transmission digital signal processor 51 is input to the digital interference cancelling device 46 of the receiver.

The wireless full duplex communication system of this embodiment is composed of the transmitter 50 and the receiver 40. The adaptive radio-frequency interference cancelling device 42 in the receiver 40 adopts the LMS adaptive filtering algorithm, while a radio-frequency interference cancelling module in an existing receiver adopts the amplitude phase search algorithm based on RSSI detection. The receiver of this embodiment has a faster convergence speed and provides a more accurate estimation result.

Persons of ordinary skill in the art may understand that, all or a part of the steps of the method in the foregoing embodiments may be implemented by a program instructing relevant hardware. The foregoing program may be stored in a computer readable storage medium, such as a ROM/RAM, a magnetic disk, an optical disc etc.

The foregoing embodiments are merely some preferable embodiments of the present invention, but not intended to limit the present invention. Any modifications, equivalent replacements, and improvements made according to the scope of the present invention should fall within the protection scope of the present invention.

**Claims**

1. An adaptive radio-frequency interference cancelling device, wherein the adaptive radio-frequency interference cancelling device applies to a full duplex communication system, and the device comprises:

   an amplitude phase adjusting module (1), configured to adjust an amplitude and a phase of a radio-frequency reference signal, output a radio-frequency adjustment signal to a subtractor (2), to enable the radio-frequency adjustment signal to converge to a self-interference signal in a radio-frequency received signal, wherein the radio-frequency reference signal is output by a power amplifier (54);

   the subtractor (2), configured to receive the radio-frequency received signal and the radio-frequency adjustment signal output by the amplitude phase adjusting module (1), and output a radio-frequency residual signal, wherein the radio-frequency residual signal is a difference signal between the radio-frequency received signal and the radio-frequency adjustment signal; and

   a baseband extracting and filtering module (3), configured to receive the radio-frequency reference signal and the radio-frequency residual signal output by the subtractor (2), extract baseband signals and perform least mean squares adaptive filtering processing on the baseband signals to obtain an amplitude phase control signal and output to the amplitude phase adjusting module (1), wherein the amplitude phase control signal is used to control the amplitude phase adjusting module (1) to adjust the amplitude and the phase of the radio-frequency reference signal;

   wherein the baseband extracting and filtering module (3) comprises a first multiplier (31), a first low-pass filter (32), a phase shifter (33), a second multiplier (34), a second low-pass filter (35), and a least mean squares adaptive filtering processing module (36), the radio-frequency reference signal is split into two signals, of which one is mixed with the radio-frequency residual signal by the first multiplier (31) and passes through the first low-pass filter (32) to obtain a first baseband product signal, and the other split radio-frequency reference signal is phase-shifted by 90 degrees via the phase shifter (33), then mixed with the radio-frequency residual signal by the second multiplier (34) and filtered by the second low-pass filter (35) to obtain a second baseband product signal, and the first baseband product signal and the second baseband product signal are input to the least mean squares adaptive filtering processing module (36) to generate the amplitude phase control signal used to control the amplitude phase adjusting module (1).

2.  The device according to claim 1, wherein the amplitude phase control signal is an adjustment coefficient signal, and the amplitude phase adjusting module (1) adjusts the amplitude and the phase of the radio-frequency reference signal according to the received adjustment coefficient signal.

3.  An adaptive radio-frequency interference cancelling method, comprising:

    adjusting an amplitude and a phase of a radio-frequency reference signal and outputting a radio-frequency adjustment signal, to enable the radio-frequency adjustment signal to converge to a self-interference signal in a radio-frequency received signal;
    obtaining a radio-frequency residual signal, wherein the radio-frequency residual signal is a difference signal between the radio-frequency received signal and the radio-frequency adjustment signal;
    receiving the radio-frequency residual signal and the radio-frequency reference signal, extracting baseband signals, and performing least mean squares adaptive filtering processing on the baseband signals to obtain an amplitude phase control signal, wherein the amplitude phase control signal is used to control adjustment of the amplitude and the phase of the radio-frequency reference signal;
    wherein the receiving the radio-frequency residual signal and the radio-frequency reference signal, extracting baseband signals, and performing least mean squares adaptive filtering processing on the baseband signals to obtain an amplitude phase control signal, specifically comprises:

        splitting the radio-frequency reference signal into two signals, mixing one of the two split signals with the radio-frequency residual signal and performing low-pass filtering to obtain a first baseband product signal;
        phase-shifting the other split radio-frequency reference signal by 90 degrees, mixing with the radio-frequency residual signal and performing low-pass filtering to obtain a second baseband product signal; and
        performing analog-to-digital processing and least mean squares adaptive filtering processing on the first baseband product signal and the second baseband product signal to generate the amplitude phase control signal, wherein the amplitude phase control signal is used to control the adjustment of the amplitude and the phase of the radio-frequency reference signal.

4.  A receiver, comprising a receiving antenna (41), a low noise amplifier (43), a down-converter (44), an analog-to-digital converter (45), a digital interference cancelling device (46), and a reception digital signal processor (47), wherein the receiver further comprises an adaptive radio-frequency interference cancelling device (42) according to any one of claims 1 or 2, the receiving antenna (41), the adaptive radio-frequency interference cancelling device (42), the low noise amplifier (43), the down-converter (44), the analog-to-digital converter (45), the digital interference cancelling device (46), and the reception digital signal processor (47) are connected sequentially, and the adaptive radio-frequency interference cancelling device (42) is adapted to receive as input signal a radio-frequency reference signal from a transmitter and the digital interference cancelling device (46) is adapted to receive as input signal a digital reference signal from the transmitter.

5.  A wireless full duplex communication system, comprising a transmitter (50), wherein the transmitter comprises a transmission digital signal processor (51), a digital-to-analog converter (52), an up-converter (53), a power amplifier (54) and a transmitting antenna (55) that are connected sequentially, wherein the system further comprises a receiver (40) according to claim 4, wherein the radio-frequency reference signal output by the power amplifier (54) is input to the adaptive radio-frequency interference cancelling device (42) of the receiver, and wherein the digital reference signal output by the transmission digital signal processor (51) is input to the digital interference cancelling device (46) of the receiver.

**Patentansprüche**

1.  Vorrichtung zur adaptiven Hochfrequenz-Störungsunterdrückung, wobei die Vorrichtung zur adaptiven Hochfrequenz-Störungsunterdrückung bei einem Vollduplex-Kommunikationssystem Anwendung findet und die Vorrichtung Folgendes umfasst:

ein Amplituden-Phasen-Anpassungsmodul (1), das konfiguriert ist zum Anpassen einer Amplitude und einer Phase eines Hochfrequenz-Referenzsignals, zum Ausgeben eines Hochfrequenz-Anpassungssignals an einen Subtrahierer (2), so dass ermöglicht wird, dass das Hochfrequenz-Anpassungssignal zu einem Selbststörungssignal in einem Hochfrequenz-Empfangssignal konvergiert, wobei das Hochfrequenz-Referenzsignal durch einen Leistungsverstärker (54) ausgegeben wird; den Subtrahierer (2), der konfiguriert ist zum Empfangen des Hochfrequenz-Empfangssignals und des Hochfrequenz-Anpassungssignals, das durch das Amplituden-Phasen-Anpassungsmodul (1) ausgegeben wird, und zum Ausgeben eines Hochfrequenz-Restsignals, wobei das Hochfrequenz-Restsignal ein Differenzsignal zwischen dem Hochfrequenz-Empfangssignal und dem Hochfrequenz-Anpassungssignal ist; und

ein Basisbandextrahierungs- und -filterungsmodul (3), das konfiguriert ist zum Empfangen des Hochfrequenz-Referenzsignals und des Hochfrequenz-Restsignals, das durch den Subtrahierer (2) ausgegeben wird, zum Extrahieren von Basisbandsignalen und zum Durchführen einer adaptiven "Least-Mean-Squares"-Filterungsverarbeitung an den Basisbandsignalen, so dass ein Amplituden-Phasen-Steuersignal erhalten und zum Amplituden-Phasen-Anpassungsmodul (1) ausgegeben wird, wobei das Amplituden-Phasen-Steuersignal zum Steuern des Amplituden-Phasen-Anpassungsmoduls (1) verwendet wird, so dass die Amplitude und die Phase des Hochfrequenz-Referenzsignals angepasst werden;

wobei das Basisbandextrahierungs- und -filterungsmodul (3) einen ersten Multiplizierer (31), ein erstes Tiefpassfilter (32), einen Phasenschieber (33), einen zweiten Multiplizierer (34), ein zweites Tiefpassfilter (35) und ein adaptives "Least-Mean-Squares"-Filterungsverarbeitungsmodul (36) umfasst, das Hochfrequenz-Referenzsignal in zwei Signale aufgezweigt ist, von denen eines durch den ersten Multiplizierer (31) mit dem Hochfrequenz-Restsignal gemischt wird und durch das erste Tiefpassfilter (32) läuft, so dass ein erstes Basisbandproduktsignal erhalten wird, und das andere aufgezweigte Hochfrequenz-Referenzsignal mittels des Phasenschiebers (33) um 90 Grad phasenverschoben wird, dann durch den zweiten Multiplizierer (34) mit dem Hochfrequenz-Restsignal gemischt wird und durch das zweite Tiefpassfilter (35) gefiltert wird, so dass ein zweites Basisbandproduktsignal erhalten wird, und das erste Basisbandproduktsignal und das zweite Basisbandproduktsignal in das adaptive "Least-Mean-Squares"-Filterungsverarbeitungsmodul (36) eingegeben werden, so dass das Amplituden-Phasen-Steuersignal, das zum Steuern des Amplituden-Phasen-Anpassungsmoduls (1) verwendet wird, erzeugt wird.

2. Vorrichtung nach Anspruch 1, wobei das Amplituden-Phasen-Steuersignal ein Anpassungskoeffizientensignal ist und das Amplituden-Phasen-Anpassungsmodul (1) die Amplitude und die Phase des Hochfrequenz-Referenzsignals gemäß dem empfangenen Anpassungskoeffizientensignal anpasst.

3. Verfahren zur adaptiven Hochfrequenz-Störungsunterdrückung, umfassend:

Anpassen einer Amplitude und einer Phase eines Hochfrequenz-Referenzsignals und Ausgeben eines Hochfrequenz-Anpassungssignals, so dass ermöglicht wird, dass das Hochfrequenz-Anpassungssignal zu einem Selbststörungssignal in einem Hochfrequenz-Empfangssignal konvergiert;
Erhalten eines Hochfrequenz-Restsignals, wobei das Hochfrequenz-Restsignal ein Differenzsignal zwischen dem Hochfrequenz-Empfangssignal und dem Hochfrequenz-Anpassungssignal ist;
Empfangen des Hochfrequenz-Restsignals und des Hochfrequenz-Referenzsignals, Extrahieren von Basisbandsignalen und Durchführen einer adaptiven "Least-Mean-Squares"-Filterungsverarbeitung an den Basisbandsignalen, so dass ein Amplituden-Phasen-Steuersignal erhalten wird, wobei das Amplituden-Phasen-Steuersignal zum Steuern einer Anpassung der Amplitude und der Phase des Hochfrequenz-Referenzsignals verwendet wird;
wobei das Empfangen des Hochfrequenz-Restsignals und des Hochfrequenz-Referenzsignals, das Extrahieren von Basisbandsignalen und das Durchführen einer adaptiven "Least-Mean-Squares"-Filterungsverarbeitung an den Basisbandsignalen, so dass ein Amplituden-Phasen-Steuersignal erhalten wird, spezifisch Folgendes umfasst:

Aufzweigen des Hochfrequenz-Referenzsignals in zwei Signale, Mischen von einem der zwei aufgezweigten Signale mit dem Hochfrequenz-Restsignal und Durchführen einer Tiefpassfilterung, so dass ein erstes Basisbandproduktsignal erhalten wird;
Phasenverschieben des anderen aufgezweigten Hochfrequenz-Referenzsignals um 90 Grad, Mischen mit dem Hochfrequenz-Restsignal und Durchführen einer Tiefpassfilterung, so dass ein zweites Basisbandproduktsignal erhalten wird; und

Durchführen einer Analog-Digital-Verarbeitung und einer adaptiven "Least-Mean-Squares"-Filterungsverarbeitung am ersten Basisbandproduktsignal und am zweiten Basisbandproduktsignal, so dass das Amplituden-Phasen-Steuersignal erzeugt wird, wobei das Amplituden-Phasen-Steuersignal zum Steuern der Anpassung der Amplitude und der Phase des Hochfrequenz-Referenzsignals verwendet wird.

4.  Empfänger, der eine Empfangsantenne (41), einen rauscharmen Verstärker (43), einen Abwärtswandler (44), einen Analog-Digital-Wandler (45), eine digitale Störungsunterdrückungsvorrichtung (46) und einen Digitalsignal-Empfangsprozessor (47) umfasst, wobei der Empfänger ferner eine Vorrichtung (42) zur adaptiven Hochfrequenz-Störungsunterdrückung gemäß einem der Ansprüche 1 oder 2 umfasst, die Empfangsantenne (41), die Vorrichtung (42) zur adaptiven Hochfrequenz-Störungsunterdrückung, der rauscharme Verstärker (43), der Abwärtswandler (44), der Analog-Digital-Wandler (45), die digitale Störungsunterdrückungsvorrichtung (46) und der Digitalsignal-Empfangsprozessor (47) sequentiell verbunden sind und die Vorrichtung (42) zur adaptiven Hochfrequenz-Störungsunterdrückung dazu ausgelegt ist, ein Hochfrequenz-Referenzsignal als ein Eingangssignal von einem Sender zu empfangen, und die digitale Störungsunterdrückungsvorrichtung (46) dazu ausgelegt ist, ein digitales Referenzsignal als ein Eingangssignal vom Sender zu empfangen.

5.  Drahtloses Vollduplex-Kommunikationssystem, das einen Sender (50) umfasst, wobei der Sender einen Digitalsignal-Übertragungsprozessor (51), einen Digital-Analog-Wandler (52), einen Aufwärtswandler (53), einen Leistungsverstärker (54) und eine Sendeantenne (55) umfasst, die sequentiell verbunden sind, wobei das System ferner einen Empfänger (40) gemäß Anspruch 4 umfasst, wobei das Hochfrequenz-Referenzsignal, das durch den Leistungsverstärker (54) ausgegeben wird, in die Vorrichtung (42) zur adaptiven Hochfrequenz-Störungsunterdrückung des Empfängers eingegeben wird und wobei das digitale Referenzsignal, das durch den Digitalsignal-Übertragungsprozessor (51) ausgegeben wird, in die digitale Störungsunterdrückungsvorrichtung (46) des Empfängers eingegeben wird.

## Revendications

1.  Dispositif de suppression adaptative de brouillage radioélectrique, le dispositif de suppression adaptative de brouillage radioélectrique s'appliquant à un système de communication bidirectionnelle simultanée, et le dispositif comprenant :

    un module d'ajustement d'amplitude et de phase (1), configuré de façon à ajuster une amplitude et une phase d'un signal radioélectrique de référence, à fournir un signal radioélectrique d'ajustement à un soustracteur (2), pour permettre au signal radioélectrique d'ajustement de converger sur un signal d'auto-brouillage dans un signal radioélectrique reçu, le signal radioélectrique de référence étant fourni par un amplificateur de puissance (54) ;
    le soustracteur (2), configuré de façon à recevoir le signal radioélectrique reçu et le signal radioélectrique d'ajustement fourni par le module d'ajustement d'amplitude et de phase (1), et à fournir un signal radioélectrique résiduel, le signal radioélectrique résiduel étant un signal de différence entre le signal radioélectrique reçu et le signal radioélectrique d'ajustement ; et
    un module d'extraction et de filtrage de bande de base (3), configuré de façon à recevoir le signal radioélectrique de référence et le signal radioélectrique résiduel fourni par le soustracteur (2), à extraire des signaux de bande de base et à effectuer un traitement par filtrage adaptatif à moindres carrés moyens sur les signaux de bande de base de façon à obtenir un signal de commande d'amplitude et de phase et à le fournir au module d'ajustement d'amplitude et de phase (1), le signal de commande d'amplitude et de phase étant utilisé pour commander le module d'ajustement d'amplitude et de phase (1) pour qu'il ajuste l'amplitude et la phase du signal radioélectrique de référence ;
    dans lequel le module d'extraction et de filtrage de la bande de base (3) comprend un premier multiplicateur (31), un premier filtre passe-bas (32), un déphaseur (33), un deuxième multiplicateur (34), un deuxième filtre passe-bas (35), et un module de traitement par filtrage adaptatif à moindres carrés moyens (36), le signal radioélectrique de référence est séparé en deux signaux, dont un est mélangé avec le signal radioélectrique résiduel par le premier multiplicateur (31) et passe à travers le premier filtre passe-bas (32) de façon à obtenir un premier signal de produit de bande de base, et l'autre signal radioélectrique de référence séparé est déphasé de 90 degrés via le déphaseur (33), puis mélangé avec le signal radioélectrique résiduel par le deuxième multiplicateur (34) et filtré par le deuxième filtre passe-bas (35) de façon à obtenir un deuxième signal de produit de bande de base, et le premier signal de produit de bande de base et le deuxième signal de produit de bande de base sont entrés dans le module de traitement par filtrage adaptatif à moindres carrés moyens (36) de façon à générer le signal de commande d'amplitude et de phase utilisé pour commander le module d'ajustement d'amplitude et de phase (1).

2. Dispositif selon la revendication 1, dans lequel le signal de commande d'amplitude et de phase est un signal de coefficient d'ajustement, et le module d'ajustement d'amplitude et de phase (1) ajuste l'amplitude et la phase du signal radioélectrique de référence selon le signal de coefficient d'ajustement reçu.

3. Procédé de suppression adaptative de brouillage radioélectrique, comprenant :

l'ajustement d'une amplitude et d'une phase d'un signal radioélectrique de référence et la fourniture d'un signal radioélectrique d'ajustement, de façon à permettre au signal radioélectrique d'ajustement de converger sur un signal d'auto-brouillage dans un signal radioélectrique reçu ;
l'obtention d'un signal radioélectrique résiduel, le signal radioélectrique résiduel étant un signal de différence entre le signal radioélectrique reçu et le signal radioélectrique d'ajustement ;
la réception du signal radioélectrique résiduel et du signal radioélectrique de référence, l'extraction de signaux de bande de base, et l'exécution d'un traitement par filtrage adaptatif à moindres carrés moyens sur les signaux de bande de base de façon à obtenir un signal de commande d'amplitude et de phase, le signal de commande d'amplitude et de phase étant utilisé pour commander l'ajustement de l'amplitude et de la phase du signal radioélectrique de référence ;
dans lequel la réception du signal radioélectrique résiduel et du signal radioélectrique de référence, l'extraction des signaux de bande de base, et l'exécution du traitement par filtrage adaptatif à moindres carrés moyens sur les signaux de bande de base de façon à obtenir un signal de commande d'amplitude et de phase, comprend spécifiquement :

la séparation du signal radioélectrique de référence en deux signaux, le mélange d'un des deux signaux séparés avec le signal radioélectrique résiduel et l'exécution du filtrage passe-bas de façon à obtenir un premier signal de produit de bande de base ;
le déphasage de 90 degrés de l'autre signal radioélectrique de référence séparé, le mélange avec le signal radioélectrique résiduel et l'exécution d'un filtrage passe-bas de façon à obtenir le deuxième signal de produit de bande de base ; et
l'exécution d'un traitement analogique-numérique et d'un traitement par filtrage adaptatif à moindres carrés moyens sur le premier signal de produit de bande de base et sur le deuxième signal de produit de bande de base de façon à générer le signal de commande d'amplitude et de phase, le signal de commande d'amplitude et de phase étant utilisé pour commander l'ajustement de l'amplitude et de la phase du signal radioélectrique de référence.

4. Récepteur, comprenant une antenne de réception (41), un amplificateur à faible bruit (43), un convertisseur descendant (44), un convertisseur analogique-numérique (45), un dispositif de suppression de brouillage numérique (46), et un processeur de signaux numériques de réception (47), le récepteur comprenant en outre un dispositif de suppression adaptative de brouillage radioélectrique (42) selon l'une quelconque des revendications 1 ou 2, l'antenne de réception (41), le dispositif de suppression adaptative de brouillage radioélectrique (42), l'amplificateur à faible bruit (43), le convertisseur descendant (44), le convertisseur analogique-numérique (45), le dispositif de suppression de brouillage numérique (46), et le processeur de signaux numériques de réception (47) étant connectés séquentiellement, et le dispositif de suppression adaptative de brouillage radioélectrique (42) étant adapté de façon à recevoir comme signal d'entrée un signal radioélectrique de référence provenant d'un émetteur et le dispositif de suppression de brouillage numérique (46) étant adapté de façon à recevoir comme signal d'entrée un signal de référence numérique provenant de l'émetteur.

5. Système de communication bidirectionnelle simultanée sans fil, comprenant un émetteur (50), l'émetteur comprenant un processeur de signaux numériques d'émission (51), un convertisseur numérique-analogique (52), un convertisseur ascendant (53), un amplificateur de puissance (54) et une antenne d'émission (55) qui sont connectés séquentiellement, le système comprenant en outre un récepteur (40) selon la revendication 4, le signal radioélectrique de référence fourni par l'amplificateur de puissance (54) étant entré dans le dispositif de suppression adaptative de brouillage radioélectrique (42) du récepteur, et le signal de référence numérique fourni par le processeur de signaux numériques d'émission (51) étant entré dans le dispositif de suppression de brouillage numérique (46) du récepteur.

FIG. 1

Radio-frequency
received signal

Radio-frequency
reference signal

Amplitude phase
adjusting module

−

+

Radio-frequency
residula signal

Amplitude phase
search processing
module

RSSI detection
module

FIG. 2

Radio-frequency
received signal

Radio-frequency
reference signal

1

Amplitude phase
adjusting module

−

+

2

Radio-frequency
residual signal

3

Baseband extracting
and filtering module

FIG. 3

Radio-frequency
received signal d

Radio-frequency
reference signal X

1

Amplitude
phase adjusting
module

2

Radio-frequency
residual signal ε

−

+

3

36

Least mean
squares
adaptive
filtering
processing
module

31

0°

×

First low-
pass filter

32

33

90°

×

Second
low-pass
filter

34

35

FIG. 4

FIG. 5

Adjust an amplitude and a phase of a radio-frequency reference signal and output a radio-frequency adjustment signal, to enable the radio-frequency adjustment signal to converge to a self-interference signal in a radio-frequency received signal

S601

Obtain a radio-frequency residual signal, where the radio-frequency residual signal is a difference signal between the radio-frequency received signal and the radio-frequency adjustment signal

S602

Receive the radio-frequency residual signal and the radio-frequency reference signal, and extract baseband signals, perform least mean squares adaptive filtering processing on the baseband signals to obtain an amplitude phase control signal

S603

FIG. 6

Adjust an amplitude and a phase of a radio-frequency reference signal and output a radio-frequency adjustment signal, to enable the radio-frequency adjustment signal to converge to a self-interference signal in a radio-frequency received signal ⟍ S701

Obtain a radio-frequency residual signal, where the radio-frequency residual signal is a difference signal between the radio-frequency received signal and the radio-frequency adjustment signal ⟍ S702

Divide the radio-frequency reference signal into two channels, mixing one channel thereof with the radio-frequency residual signal and perform low-pass filtering to obtain a first baseband product signal ⟍ S703

Phase-shift the other channel of the radio-frequency reference signal by 90 degrees, mix with the radio-frequency residual signal and perform low-pass filtering to obtain a second baseband product signal ⟍ S704

Perform least mean squares adaptive filtering processing on the first baseband product signal and the second baseband product signal to generate an amplitude phase control signal ⟍ S705

FIG. 7

Radio-frequency received signal

41

Radio-frequency reference signal

| Adaptive radio-frequency interference cancelling device | 42 |

| Low noise amplifier | 43 |

| Down-converter | 44 |

| Analog-to-digital converter | 45 |

Digital reference signal

| Digital interference cancelling device | 46 |

| Reception digital signal processor | 47 |

**FIG. 8**

Transmitter 50                                    Receiver 40

Radio-frequency received signal

55                                                                    41

Radio-frequency
reference signal          Adaptive radio-          42
                          frequency interference
                          cancelling device

54    Power amplifier                             Low noise amplifier          43

53    Up-converter                                Down-converter          44

52    Digital-to-analog                           Analog-to-digital          45
      converter                                   converter
                          Digital reference signal
                                                   Digital          46
                                                   interference
                                                   cancelling device

51    Transmission                                Reception digital          47
      digital signal                              signal processor
      processor

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012201153 A

- US 201001366925 A1, Raymond J. Lackey